# EUROPEAN PATENT APPLICATION

(11) **EP 3 165 109 A1**
(43) Date of publication of application: **10.05.2017**
(21) Application number: 16197159.3
(22) Date of filing: 03.11.2016
(51) Int. Cl.: A43B 1/00, A43B 13/18, B33Y 80/00

(54) **CUSTOMIZED SOLE OR MIDSOLE FOR FOOTWEAR**

(30) Priority: 03.11.2015 IT UB20154949
(71) Applicant: Vibram S.p.A., 21041 Albizzate (Varese) (IT)
(72) Inventor: BRAMANI, Marco, 21041 Albizzate (Varese) (IT); GHIGNONE, Antonello, 21041 Albizzate (Varese) (IT); CAVALLARO, Marco, 21041 Albizzate (Varese) (IT)
(74) Representative: Feltrinelli, Secondo Andrea

(57) **Abstract**

Sole or midsole for footwear, such as sports shoes, or shoe comprising a sole or midsole comprising an upper surface (10), adapted in use to face toward the foot of a user, a lower surface (20), adapted in use to face toward the surface or the ground for resting of said sole or midsole, and a thickness (S), wherein the sole or midsole comprises a modular cellular structure (4), optionally produced by means of three-dimensional printing techniques or "additive manufacturing", based on biomechanical data acquired from a user and processed by special software.

## Description

### TECHNICAL FIELD OF INVENTION

The present invention relates to a customizable sole or midsole for footwear. In particular, the present invention relates to a sole or midsole comprising a personalized structure obtained by eliciting personal biomechanical and/or biometric data directly from the foot of a user, transforming such data into a functional matrix or custom template, and subsequently molding the three-dimensional structure.

The present invention relates to a shoe, in particular a sports shoe, with a customizable sole or midsole.

### PRIOR ART

The technique of three-dimensional printing, also known as "additive manufacturing" is experiencing an ever greater development. In general terms, this technique proposes to produce a three-dimensional object, including those with complex structures, starting from a three-dimensional "file" generated by appropriate software and via production, for example, by means of successive layers, until obtaining a complete three-dimensional object.

This construction technique allows the production of geometries, of any geometric complexity, according to an approach of addition of material also allowing the use of material where needed. This simultaneously allows an elevated freedom of design/construction and the possibility of reducing waste material.

Such technology, at this time, also has some disadvantages, such as long production times and the impossibility, for particularly complex objects, to make coming out the material of each construction layer not directly concerned in the production of the object's three-dimensional structure, but for example "trapped" in the channels or cells of the structure.

In the footwear sector, more particularly in the field of athletic footwear, such as running shoes, it is particularly felt the problem to have a product that is well suited to the different characteristics of the foot and of the movement of each user, in relation to the specific athletic activity for which they are worn.

The most common technique for the production of soles or midsoles of footwear is that of traditional molding of polymeric or rubber material.

Further, to date, a sole is produced by gluing or combining different components such as tread, midsole of different density, and any functional elements.

Such functional elements are by their nature discrete and do not allow a continuous local control and of the function to which they are responsible.

Further, the different components, previously molded in many cases, are assembled by gluing or co-molding, thus requiring the production of numerous molds (for example one for each element).

The expanded materials, which make up a sole or at least some of its components, are produced with varying viscoelastic properties depending on various requirements and can in turn be coupled to one another in discrete elements.

The sole thus obtained therefore has a type of "discrete structure" while the complexity of the movement of the foot, together with the specific uniqueness of the foot-ground interaction, would require a complex structure made up of areas with dedicated distribution of materials and continuous geometric and/or dimensional variation.

The known types of soles, however, are produced in the standard manner, "discretely" or area by area, and not continuously and, therefore, they cannot fully respond to user's questions of customization of soles and footwear.

There is therefore a need to produce a sole for footwear, and in particular, a customizable sole or midsole, able to respond to the above requirements, while allowing the performance of athletic activity, for example walking or running or the like, for which they are provided.

### AIMS OF THE INVENTION

The main aim, therefore, of the present invention is to improve the state of the art in the field of soles or insoles for footwear through the production of a sole or midsole for footwear that is customizable and/or customized on the base of specific and measured data obtained directly from the user or available in a database as a result of previous measurements. Such measurements can be used for the design and production of the sole or midsole, subject of the present invention, providing, for each unitary element of the same, a dedicated structure whose "mechanical response" and/or "elastic response" is appropriate and individual.

Yet another objective of this invention is that to provide a sole or midsole for footwear that conforms in a continuous manner, for its full extension, to the specific characteristics of the foot and/or the type of movement of each user.

A further aim of the present invention is to provide a sole or a midsole for footwear that is easy to produce at competitive costs.

A still further objective of the present invention is to provide a sole or midsole that allows to save material and which is therefore more respectful of the environment and ecological.

According to a first aspect of the present invention, a sole, or a midsole for footwear is provided according to the attached claim 1.

According to a further aspect of the present invention, a footwear comprising a sole or a midsole is provided according to the attached claim 17.

A further objective of the present invention is moreover that of furnishing a method for producing a sole or midsole according to the present invention.

Further advantageous or preferred characteristics of the sole or midsole for footwear are described in the attached dependent claims.

### BRIEF DESCRIPTION OF THE DRAWING

Other features and advantages of the present invention will be more apparent from the description of an embodiment of a sole or midsole for shoes, illustrated by way of example and not limitation in the accompanying drawings, in which:
Figure 1 is a perspective view of one version of a sole or midsole for footwear according to the present invention;
Figures 2a and 2b are two examples of a lateral view of a sole or a midsole, such as that of Figure 1, sectioned in the longitudinal direction according to a plane perpendicular to the ground;
Figure 3 is a perspective view of another version of a sole or midsole for footwear according to the present invention;
Figure 4 is a schematic perspective lateral view of one version of the structure of the sole or midsole according to one version of the present invention;
Figure 5 is a perspective view from the front of a sole or midsole according to one variant of the present invention;
Figures 6 and 7 are views, respectively perspective of the bottom taken frontally and perspective of the upper part from the rear of a sole or a midsole according to one version of the present invention;

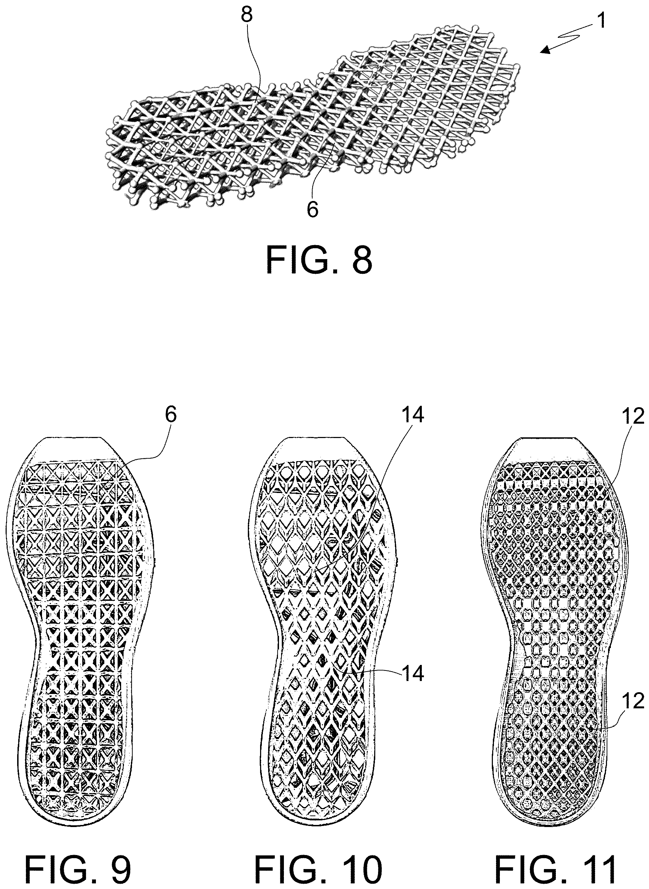

Figure 8 is a perspective view from the rear of a sole or a midsole according to one version of the present invention;
Figures 9 to 11 are top plan views of versions of a sole or midsole according to the present invention;
Figure 12 is an embodiment of a shoe produced with a sole or midsole according to the present invention;
Figures 13, 14 and 15 illustrate various possible treads or examples of structure of a sole or midsole according to the present invention;

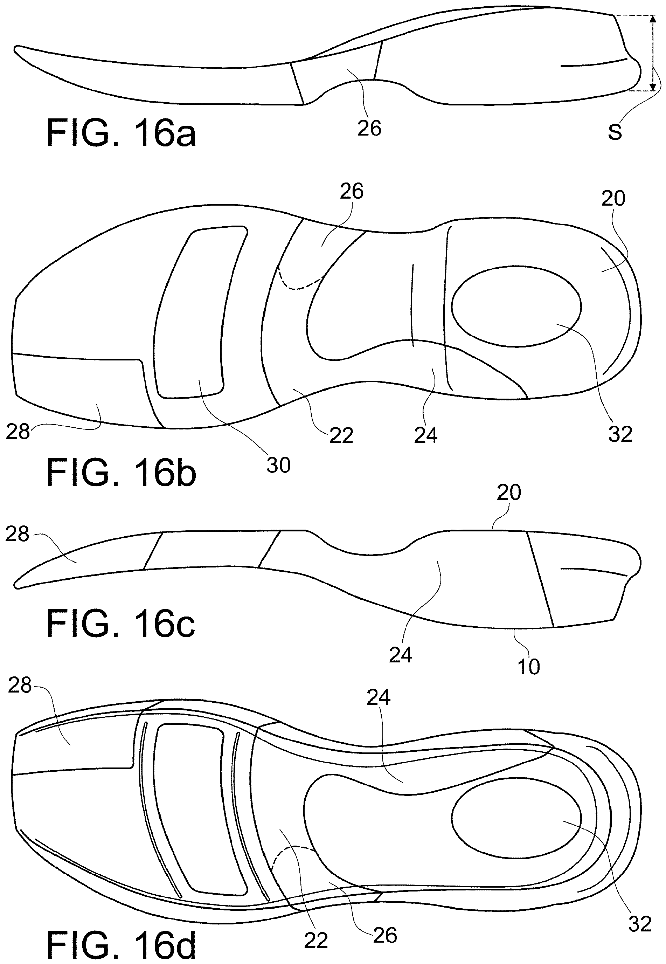

Figures 16a to 16d illustrate schematically the areas having varying rigidity and/or support and/or elasticity of a traditional composite sole or midsole illustrated respectively from the side, from below, from the other side and from the top. Such areas, or at least some of them, illustrated as areas defined in the traditional solution, are also found in the midsole or sole according to the present invention but do not present defined and discreet, but rather continuous characteristics. Therefore, the limitations of such traditional soles or midsoles are overcome by the continuous distribution of an unlimited number of areas obtained with the structure according to the present invention;
Figure 17 is an example of customization of a sole or midsole according to the present invention depending on the distribution of foot pressure and/or on the characteristics of foot support and/or of the gait of the user. In particular, in each pair of images, on the right there is the image related to the data acquired by the user while on the left there is the corresponding sole or midsole according to the present invention, as can be seen, the various differentiated areas can vary depending on the specific data, and therefore the user's specific characteristics;
Figures 18 to 23 illustrate perspective views of various versions of the present invention, partially in transparency, in order to illustrate the three-dimensional cellular structure and the possible additional filling structure 50.

### EMBODIMENTS OF THE INVENTION

With reference to the attached figures, the reference number 1 generally indicates a sole or a midsole according to the present invention.

A midsole corresponds to the intermediate layer of a sole of a shoe, for example of a sports shoe, disposed between the upper and/or inner sole and the true and proper outer sole or tread.

The sole and/or the midsole are adapted to support the user's weight, provide stability to the foot and present, in general, the desired characteristics in relation to the athletic activity or movement that the user intends to perform wearing the specific footwear equipped with a particular sole and/or midsole.

In the remainder of this specification, the characteristics or properties described for a sole can be considered valid also for a midsole and vice versa, where not specifically indicated.

Further, the indicated spatial references are related to a sole or midsole positioned on a supporting surface or the ground.

In particular, with low or lower it is meant an object or component facing or positioned toward the support surface or the ground, with upper or higher it is meant an object or component facing or positioned toward the user, with lateral it is meant an object or component facing or positioned medially or laterally relative to the user's foot.

Further, with front or frontal it is meant an object or component facing or placed in correspondence with the toes of the foot of a user while with rear or posterior it is meant an object or component facing or placed in correspondence with the heel of the foot of a user.

The sole or midsole, according to the present invention presents a thickness S and an extension according to a plan view, substantially corresponding to that of the soles or midsoles of the traditional type or slightly greater than that of the user's foot.

The sole or midsole, according to the present invention, comprises an upper surface 10, adapted in use to face toward the foot of a user, and a lower surface 20, adapted in use to face toward the resting surface or the ground.

The upper surface 10, in the case of one version of the midsole 1, is designed to come into contact with the upper and/or inner sole.

The upper surface 10 of the sole or midsole 1, further, is adapted to be linked with an upper of a shoe.

The upper surface 10 is adapted to be linked with an upper of a traditional shoe according to the usual methods, for example by gluing or sewing.

The lower surface 20 is adapted, however, to be constrained with the outer sole, and/or with the tread B, in the case of a midsole 1, or both for the sole and the midsole, with a tread B, for example by means of conventional gluing techniques.

The lower surface 20, in the case of a midsole 1, is adapted to be constrained, for example by means of conventional gluing techniques, with the outer sole, the tread B, or can act by itself as a tread.

The lower 20 and upper 10 surfaces present, while being constituted - as will be better clarified hereinafter - from modular elements or cells 4, a surface of at least a minimum width to allow coupling with the upper and with the outsole or tread B.

The upper and the outsole or tread B, in one version of the invention, is coupled to the sole or to the midsole 1 according to standard processes (e.g. gluing, sewing, etc.).

In addition, in one version of the invention, the upper surface 10 and/or the lower surface 20 present a peripheral edge 40, optionally at least slightly or partially raised or recessed with respect to the extension according to a plan view of the upper surface 10 and/or the lower surface 20, in order to facilitate the fixing of the same respectively to the upper and/or tread B. For example, in the figures it is illustrated the peripheral edge 40 of the upper surface 10 which protrudes externally with respect to the said surface 10.

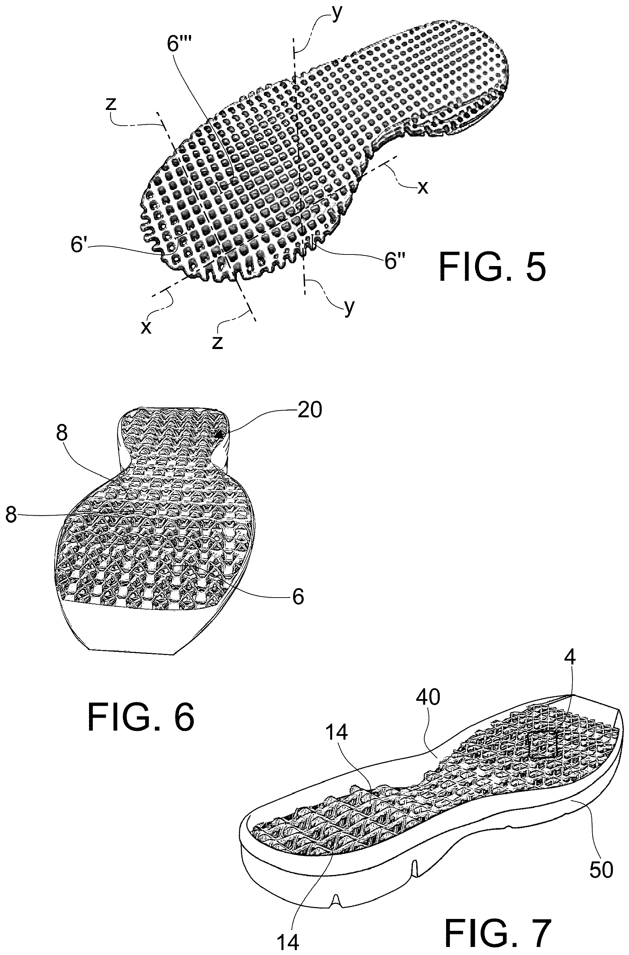

Such edge 40, in one version for example illustrated in Figure 7, can be part of or be comprised of a further structure 50, or an outer covering 50b, which will be described hereinafter.

The thickness S of the sole or midsole 1 is variable. For example, the part in use in the front F of the midsole or sole 1 the thickness S presents a value S1, while the part in use in the rear R of the midsole or sole 1 the thickness S presents a value of S2. S2, according to one version of the invention, is greater than S1.

The sole or midsole 1 comprises, according to the present invention, a reticular and/or modular cellular structure 4.

The cellular structure 4 is shaped as a three-dimensional net or mesh or as a structure having three-dimensional modules or lattice repeated several times along the longitudinal and/or transverse extension and/or in the thickness of the midsole or sole 1 itself.

The modular cellular structure 4 extends along substantially the entire longitudinal extension or front-to-rear (F-R) and/or transverse or side-to-side and/or of the thickness (S) of sole or midsole and/or in space or volume defined or occupied by the sole or midsole.

In one particular version, this modular cellular structure 4 extends along the entire extension longitudinal or front-to-rear (F-R) and transverse or side-to-side and of the thickness (S) of said sole or midsole and/or in space or volume defined or occupied by said sole or midsole.

In one version of the invention, the midsole or sole 1 or the structure, shaped as a three-dimensional net or knitting or a three-dimensional module or as a framework, or each cell 4 of the cellular structure comprises first elements 6 and vertices or nodes or convergence nodes 8.

In particular, the first elements 6 present a substantially elongated and/or linear and/or undulating trend along a direction in use substantially vertical, inclined or horizontal. These trends may thus generate complex and/or overlapping and/or interpenetrated and/or intertwined structures.

This direction, according to an example of embodiment, is contained in the sole or midsole 1.

In particular, as visible for example in Figure 5, the first elements 6 extend substantially along a longitudinal axis x-x (first elements 6') or a longitudinal axis y-y (first elements 6") or a longitudinal axis z-z (first elements 6"').

In one version of the invention, the longitudinal axis x-x can be defined as a horizontal or front-rear F-R axis and the longitudinal axis y-y can be defined as vertical or from the upper surface 10 to the lower surface 20.

The z-z axis can be defined as transverse or side-side and can be, in one version of the invention, perpendicular to both the x-x axis and y-y axis (as shown for example in Figure 5).

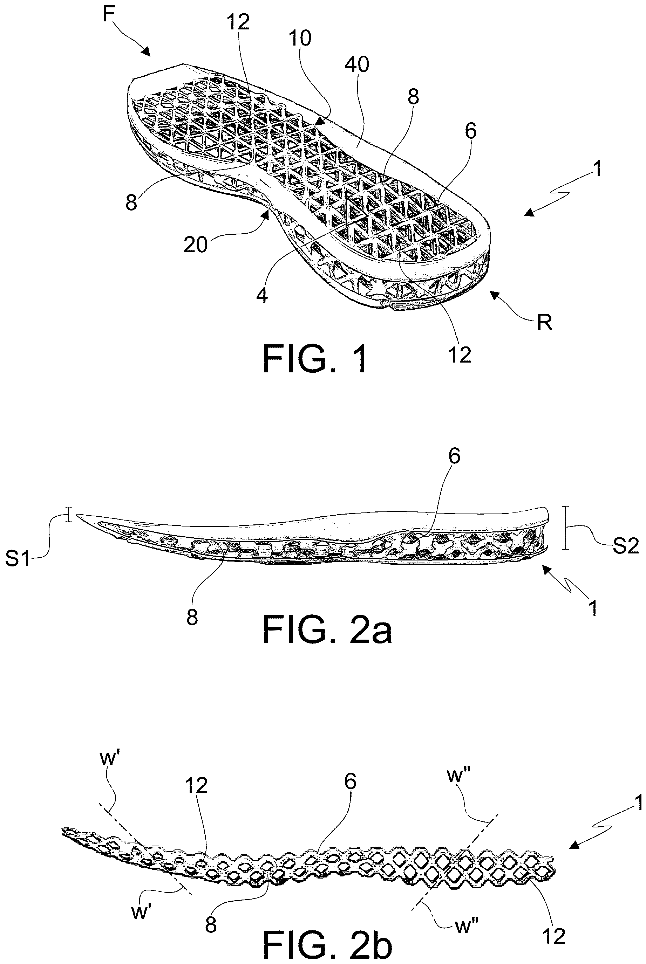

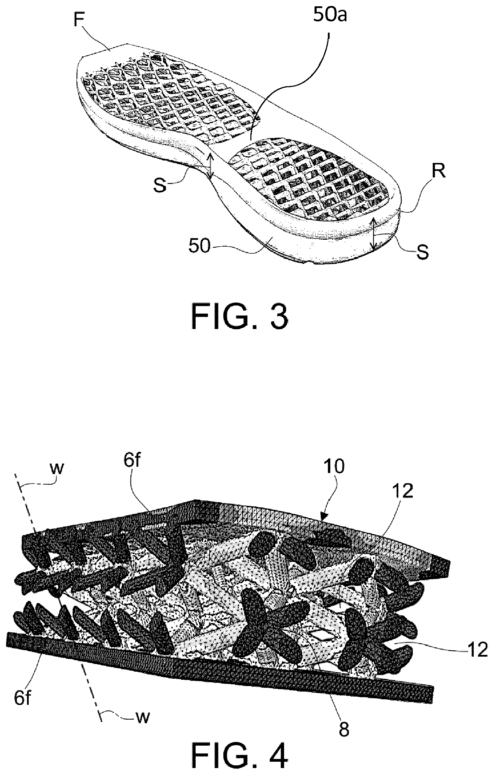

In a further version of the invention, alternatively or in addition to the preceding, the first elements 6 extend along an oblique axis w-w (first elements 6f, as visible in Figure 4). The w-w axis is not perpendicular to at least one axis indicated by x-x, y-y and z-z. In a same sole or midsole 1 there can be more oblique axes w-w, such as axes w'-w' and w"- w" visible in Figure 2b.

The nodes 8 correspond to the contact and/or intersection points between the various first elements 6.

The nodes 8 are points of convergence of the first elements 6.

The nodes 8, therefore, may have different shapes, which may result from the interpenetration and/or convergence of the first elements 6.

The nodes 8 may also be referred to hereinafter as convergence nodes 8, without departing from the scope of the present invention.

In one version of the invention, these nodes 8 are simply given by the area of contact of some first elements 6 or of interpenetration of the same. In this sense, the nodes 8 are indistinguishable from the first elements 6.

Considering a cell of the cellular structure, which constitutes the sole or midsole 1, the cell is composed of more faces having substantially regular or irregular polygonal shapes. The first elements 6 constitute, for example, the sides of the faces of the cell 4, or rather the edges of the cell itself.

The contact points between the various sides or edges - made of the first elements 6 - are constituted of the nodes 8. The nodes 8 can be considered the vertices of the cell itself.

At least two first elements 6 branch out, or intersect or are in contact with a node 8.

The cells 4 may be variously oriented in space and in a same midsole there may be cells 4 having different orientations, different shapes, and/or lying on different planes.

In particular, each face of the cells 4 can lie on a horizontal plane parallel to the support surface or to the ground, on a transverse vertical plane, which runs from side to side of the sole or midsole 1 or on a longitudinal vertical plane, which runs from front to rear of the sole or midsole 1.

Alternatively or as an additional feature, the cell 4 can have at least one face, which lies on an oblique plane with respect to at least one of the planes identified above.

Each cell can have one or more faces lying on one or more planes identified above.

More particularly, the midsole or sole 1 according to one version of the present invention can comprise cells 4 having the same shape and size or dimensions or orientation or different density according to the specific area of the midsole or sole 1 in which they are placed.

The area enclosed between the first elements 6, or the area of the faces of the cell that constitutes the midsole or sole 1, is at least partially occupied by an opening 12.

In one version of the invention, the cell 4 has a substantially parallelepiped shape.

In one version of the invention, the structure consists of open cells, in the sense that they have at least one or two or at least two faces affected by an opening 12.

In the version in which the cell 4 has a substantially parallelepiped shaped, the openings 12 can affect or occupy three, four, five, six or more faces.

The cell structure or framework constituting the midsole or sole 1 creates a net or knitting or with modules or cells structure.

Each first element 6 presents a certain length along the longitudinal axis along which it extends, and a given cross-section. The cross section is taken along a plane perpendicular to the length of the first element 6.

The cross section of each first element 6 may be circular, triangular, substantially rectangular, or square or polygonal, for example pentagonal, hexagonal, octagonal, etc.

The cross section of each first element 6 may be bilobate, trefoil, cloverleaf, etc.

These sections allow the definition of complex structures able to offer a wide range of different properties in terms of elasticity, and/or lift, and/or resistance, apparent density and/or damping power or "cushioning".

The first elements 6 of the midsole according to the present invention determine a three-dimensional structure or as stated a cellular structure.

Each convergence node 8 presents a shape substantially corresponding to that of a solid geometric body, for example a sphere or a faceted sphere. The shape of the sides present on a node 8 having a substantially faceted spherical shape may correspond to the shape of the transversal cross section of the first elements 6 which are in contact with the node 8 itself.

In a further version, the node 8 presents a shape given by the join of the first elements 6 which are in contact at the node 8 itself.

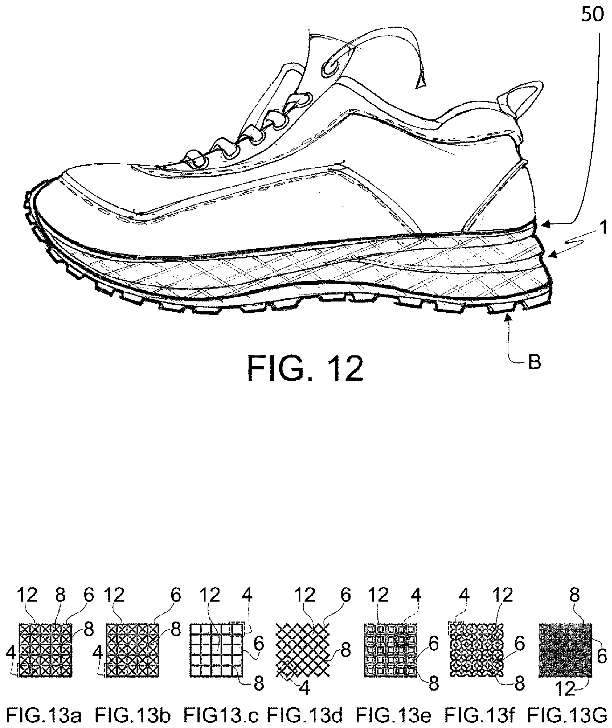

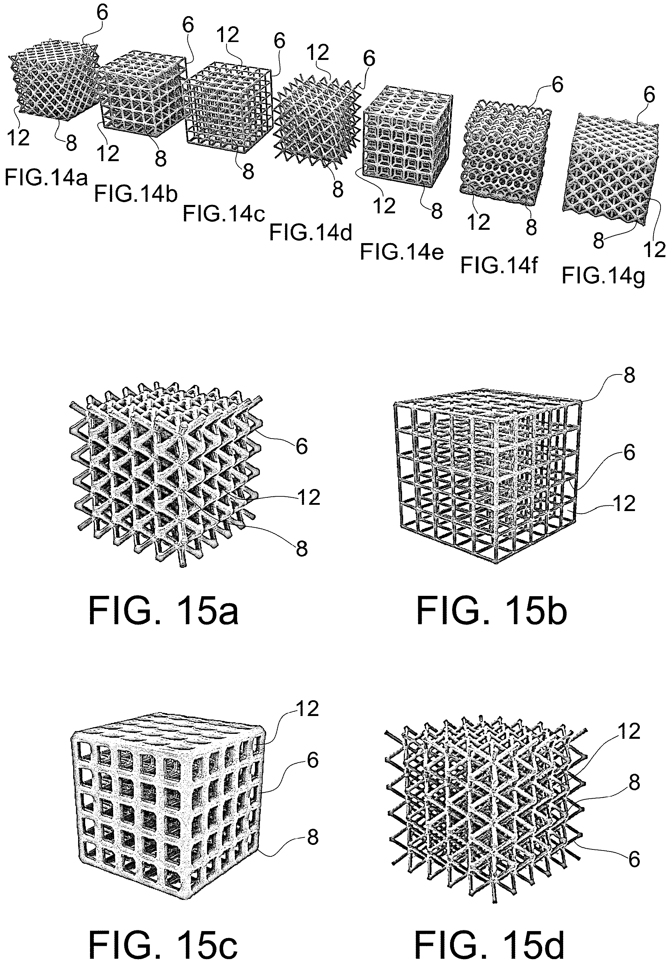

Considering the shape of the faces of a cell 4, that is to say considering its structure from a two-dimensional point of view, the first elements 6 may intersect and come in contact with the nodes 8 in order to create faces having known, more or less simple, geometric shapes, such as for example hexagons, circles and spirals, more complex shapes, squares or rectangles, trefoil or oval shapes, quadrangular or triangular shapes; some of these shapes are visible in Figures 13 to 15.

In at least one version of the invention, each cell 4 of the cellular structure is constituted by at least two first elements 6 and/or each face of the cell 4 is constituted by at least two first elements 6.

In one further version, in the presence of the first elements 6 having a shape or extension particular or complex, a cell 4 may be constituted by only one of these first elements 6.

In one version of the invention, the cellular structure 4 has a lattice shape with a square or quadrangular base.

Considering, for example, the most complex shapes, the cells 4 present in a midsole or a sole 1 according to the present invention, may have faces of different shapes from cell to cell.

In particular, since the faces of such cells are occupied or affected by the opening 12, such cells can be intertwined or joined by sections of bridging connection 14.

In particular, a node 8 of a cell (for example a first cell) can be located at a lower position with respect to the first elements 6 which are in contact with a same node. Such node 8 can be within the "space" or volume occupied or determined by a particular cell 4, for example by a second cell. In this case, the first elements 6 that branch from such node 8 of the first cell can intercept at least one opening 12 of the at least one face of the second cell. In this way, the first and the second cells appear intertwined or interpenetrated with each other.

Similarly, the node 8 of a first cell located in a lower level in use may be placed above or higher to a face of a second cell in use placed at a higher level. In this way, a first element 6 of the first cell, which departs from that given node 8, can intersect at least one face of the second cell, forming of complex multilayer or multilevel structures.

In particular, in the midsole or sole 1 according to the present invention, the cells 4 of the cellular structure are repeated several times in order to occupy and determine the volume or space determined or occupied in the midsole or sole 1 itself.

Therefore, considering the thickness S of the midsole 1, it can be constituted by a single layer of cells 4 or more layers of cells 4 for example overlapping. The number of cells 4 present in a determined point of the midsole or sole 1 can vary in function of the area of the midsole or sole 1 that is being considered.

The functions carried out by a sole or a midsole are generally the following: supporting the user's body (by controlling the forces between the user and the ground), shock absorbing, pressure distributing, accompanying and facilitating the dynamic functions related to the movement of foot, ankle and lower extremities.

The sole or midsole 1 according to the present invention, therefore, presents a functional gradient of mechanical, and/or biomechanical and/or biodynamic properties along and across the cellular structure itself and determined by the latter on the basis of data acquired from the user.

For example, as shown in Figure 16, the midsole or sole 1 can be schematically subdivided into the various zones present in a traditional sole.

These areas, whilst also being identified in the sole or midsole 1, are not delimited by a specific or defined edge. They are in fact continuous and the properties of the cells 4 that constitute the sole or midsole - and therefore these areas - vary in a gradual manner from zone to zone.

Each zone presents certain characteristics of user's weight support, and/or elasticity, and/or strength and/or lift.

Even in its cellular structure 4, in fact, the sole or midsole 1 presents a three-dimensional structure made in a single piece. There are in fact no inserts or components separate and/or previously prepared included.

In one version of the invention, the cells 4 present a substantially helical or spiral shape, in which the first elements 6 are configured as helixes or spirals and the nodes 8 correspond to the ends of the helixes or spirals.

The characteristics of the midsole or sole 1 are specific both of the type of athletic activity or movement that the sole is designed to accomplish and of the specific needs and peculiarities of the user, as well as its physical, biomechanical and/or biodynamic characteristics.

Therefore, the complex and continuous structure of the sole or midsole 1, and/or the type of elements, and/or their size and/or their positioning are determined on the basis of data acquired from the user.

For example, considering the points or areas of the midsole or sole affected by different functions (for example of lift and/or elasticity, or for example by the supporting values to the thrust, and/or the braking support, and/or cushioning, and/or stability, and/or adhesion to the ground), it is possible to define one or more areas of differentiated lift and/or elasticity, for example an area 22 of the pre-metatarsal support (e.g. placed in the retrocapitato the heads of the five metatarsals of the foot), and/or an area 24 of medial support (e.g. of pronation control), and/or an area 26 of the lateral support (e.g. of inversion control), and/or an area 28 of thrust (e.g. placed under the phalanges of the first toe of the foot), and/or an area 30 of metatarsal cushioning (e.g. with reduced lift, under the five metatarsal heads) support, and/or an area 32 of the heel cushioning (e.g. with reduced lift, placed under the heel).

These areas of the midsole or sole 1, or at least one of the same, are determined by the cellular structure 4 or by the sizes of length and cross section of the first elements 6 and of the nodes 8 that determine the cells 4 of the modular structure described above.

In particular, for example, where greater support is necessary, the cellular structure 4 will have characteristics for ensuring an adequate support, while in areas where a greater thrust is needed, the cellular structure 4 will have characteristics so as to ensure an adequate thrust and thus having a proper elasticity.

For example in the areas where a greater shock absorption is necessary, the structure will ensure a better damping capacity or "cushioning" in the interaction with the ground.

In particular, a peculiar characteristic of the midsole or sole 1 according to the present invention is that it is customizable.

This means, that the various areas or points of the midsole or sole 1 may vary depending on the distribution of foot pressure, and/or its kinematics, and/or the user's way of walking or running, and/or the type of movement or athletic activity that must be performed through the use of said midsole.

For example, the sole or midsole 1 is produced according to the following method.

Firstly, data obtained from the individual measurements of a user are acquired. The present invention has the possibility to be designed and produced on the basis of the personal biomechanical features and/or of the personal dynamic features of resting of the foot and/or the biometric and/or biodynamic characteristics for the specific activity or for a specific athletic action or also for a specific movement that the user wishes to perform, thus allowing the total customization of the functions of the sole or midsole itself.

These data are then processed using a special software and a fully digital approach in a functional matrix (based on a specific template), and thus in a structure composed of modular elements (nodes 8 and first elements 6 or frameworks or cells 4) that can be varied in shape, density, length, diameter, section and size in general in order to locally obtain the "viscoelastic" response, the "support" and/or the absorption required in function of the reference model used for the end user (customization).

It is now possible to obtain real-time biometric and/or biodynamic measurements and/or of, in particular, foot pressures. These measurements are digitized, by equipment such as scanners, treadmill instruments, systems or systematised Gait Analysis, sensors for acquisition of kinematic of the movement, insoles with sensors and other appropriate instrumentation.

Such measurements can be used for the production of the sole or midsole, aim of the present invention, by providing for each unitary or modular element, or cell of the same a structure - and thus "elastic response" - appropriate and individualized.

The midsole 1 according to the present invention, therefore, has the possibility to be designed and produced in function of the biomechanical personal characteristics and of dynamics of the support of the foot, allowing total customization of the functions that each area of the midsole or sole must possess.

The values acquired according to the specific characteristics of the user's foot are one or more of the following: static and/or dynamic data from the foot, plantar pressure during walking, running or athletic movement, the mode of movement of the foot, ankle or lower legs (so-called "Gait analysis"), biometric acquisition.

The midsole or sole 1 according to the present invention, in particular its cellular structure 4, is produced - on the basis of the indications present in the functional matrix, and thereby on basis of the data acquired by the user's foot - by means of three-dimensional printing techniques or "additive manufacturing" (e.g. "SLS" or "Selective Laser Sintering", "FDM" or "Fused Deposition Modeling", "SLA" or "Stereolithography, "DLP" or "Digital Light Processing", or "CLIP" or "Continuous Liquid Interface Production", or "MJM" or "Multi Jet Modeling" or "PolyJet" or other similar techniques).

In this way, the distribution of the functions or properties of each point or area of the midsole or sole 1 is calibrated on the measurements taken by the user and transferred from the digital functional matrix to the material of the midsole or sole, in particular, the characteristics of its cellular or modular structure.

The main features of the midsole 1, which vary from area to area continuously and without interruption, are the elasticity, and/or the lift and/or the apparent density and/or the damping power or "cushioning".

The apparent density of the sole or midsole 1 is calculated taking into consideration the total volume occupied by the sole or midsole (thus its external dimensions), including therefore, void spaces.

The modular or cellular structure 4, therefore, reproduces in each area at least the specific properties of elasticity, and/or lift, and/or apparent density and/or the damping power required or desired by the user in function of its specific biometric, walking or gait and athletic movement to perform requirements.

In one version of the invention, the SLS technique may be one of the preferred techniques.

The materials used to produce the midsole or sole 1 according to the present invention are the materials suitable to be molded by means of three-dimensional printing or "additive manufacturing". For example, such materials include, among others acrylonitrile butadiene styrene (ABS), thermoplastic polyurethane (TPU) or polyamide (PA), thermoplastic elastomers, curable resins, or metals or ceramic materials, etc.

The midsole or sole 1 thus obtained is light, compared to the soles or midsoles molded by means of conventional methods.

In addition, the midsole or sole 1 thus obtained is able to present areas that perform different properties without discontinuity from area to area. In particular, the midsole or sole 1 according to the present invention is locally different, but in a continuous manner, with a gradual transition of functions from point to point or from area to area. To achieve this, the modular or cellular structure 4 of the midsole or sole according to the present invention varies in density or size of the first elements 6 and/or of the nodes 8 and/or, in general, of the cells 4 from point to point or from area to area in a gradual and continuous manner. Unlike what happens with traditional midsoles or soles, discontinuities between zones having different functions, such as support, or resistance or elasticity, are not therefore generated.

In this way, the midsole or sole 1 according to the present invention also mimics the anatomy, the movement of the foot and the distribution of user loads in a more accurate way than with traditional soles or soles equipped with inserts having special functions or anatomy.

In this way, it is possible to meet specific user needs or requests, obtaining a midsole or sole customized in a complete and continuous way, while ensuring excellent performance, for example athletic in the case of sport shoes.

A particularly important result is obtained using the midsole or sole according to the present invention for running shoes, for example.

In this way, the midsole or sole 1 reproduces and/or responds to the function and the type of the user's movement or gait.

In a further version of the invention, such as illustrated in Figures 3, 12, the midsole 1 may, instead of presenting a lateral open cellular structure, to be inserted within a structure 50. This structure 50, which in at least one version of the invention has a substantially annular pattern, continuous or substantially continuous, surrounds or encircles perimetrally the midsole 1.

The thickness of this structure 50 can be reduced when compared to the thickness S of the midsole, and eventually only affecting the peripheral border of the midsole at the upper surface 10 or lower surface 20, or it can be equal to or slightly greater than the thickness S of the midsole, thus optionally wrapping around the whole peripheral border of the midsole, from the upper surface 10 to the lower 20. In at least some portions of the perimeter of the midsole, this thickness of the structure 50 can present an intermediate size compared to the extent of the thickness S of the midsole at such point.

In addition, such structure 50 can have one or more elongated portions 50a with a substantially transverse trend that is to say from side to side, with respect to the sole.

Such at least one elongated portion 50a is positioned transversely in the central part of the sole, for example in the plantar arch region of the foot of the user. Its transverse extension covers substantially the width of the sole, thus being adapted to connect or join the lateral and medial borders of the same or even the medial and lateral portions of the annular portion of the structure 50.

The at least one elongated portion 50a, according to one variant of the invention, has a longitudinal size (calculated according to the front-rear direction (F-R) of the sole) substantially constant throughout its extension.

In a further version, such a longitudinal size is greater at the peripheral border of the sole or midsole 1 and progressively decreases toward the center of the sole or midsole 1, for example, away from the medial and lateral portions of the sole or midsole or the structure 50.

The structure 50 and elongated portion 50a have as a whole a substantially "8"-like shape, considering their extension in plan.

In one version of the invention, a unique elongated portion 50a at the upper surface 10 of the sole or midsole 1 is present.

In one version of the invention, a unique elongated portion 50a at the lower surface 20 of the sole or midsole 1 is present.

In a further version, there is an elongated portion 50a at the upper surface 10 of the sole or midsole 1 and a respective second elongated portion 50a at the lower surface 20 of the sole or midsole 1.

In one particular version, for example, when the sole must have characteristics of resistance with respect to the ground, it is possible that there are, at the lower surface 20, more elongated portions 50a, optionally running parallel to each other, or staggered or even perpendicular to each compared to the other.

In special situations, linked to the support, or to the resistance or even to the elasticity that is desired for the midsole, there can be more elongated portions 50a at the upper surface 10, in addition to or alternatively with respect to the at least one elongated portion 50a present in the lower surface 20.

The presence of the structure 50 confers greater stability and resistance to lateral or peripheral portions of the sole or midsole 1, particularly in areas that may have the most contact with or strike the ground.

Moreover, the presence of the at least one elongated portion 50a, positioned in a manner substantially transverse with respect to the sole or midsole 1, gives greater support for the user, and/or a greater resistance, and/or improved characteristics of flexion and/or elastic response.

Therefore, this additional structure 50 is adapted to be inserted into, and/or incorporating, and/or containing and/or covering at least laterally or at least partially the sole or midsole 1 or its cellular structure 4.

Such portion 50 and/or such at least one elongated portion 50a can be produced of polyurethane or ethylene-vinyl-acetate or SBS or styrene-butadiene-styrene polymer or silicone rubber or a solidifiable material in fluid form or another known material for the production of traditional midsoles or soles.

This additional structure 50 encompasses or encloses the sole or midsole or cellular structure 4. In this way, it acts as a wrap at least for the perimeter of the sole or midsole according to the present invention.

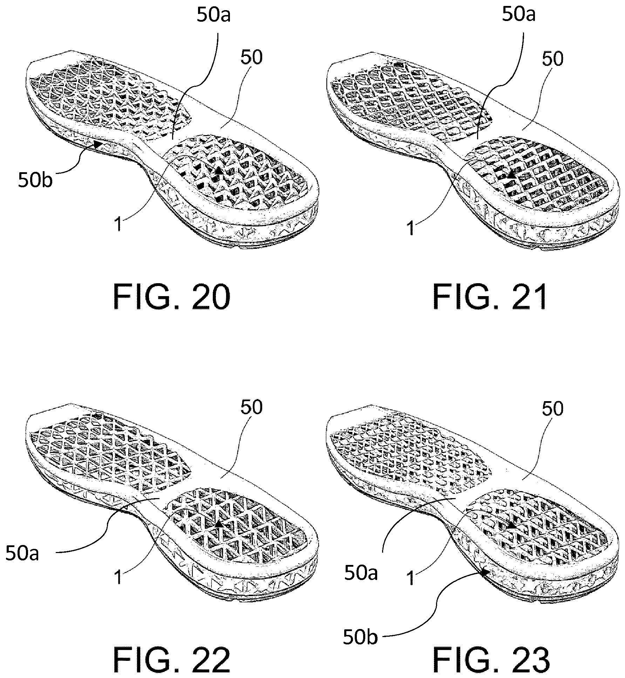

Moreover, the further structure 50 may be constituted by or comprise, in one version, an outer covering 50b, capable of at least laterally covering the sole or midsole and/or the openings 12 of the cells 4 (as visible for example in Figures 20 and 23).

Therefore, this outer covering 50b includes and/or encloses and/or covers, at least laterally, the sole or midsole or the cellular structure 4.

This covering 50b can be thin and transparent or not. Moreover, it can be made of the same materials of the structure 50 or of different materials.

This additional structure 50, optionally also in the form of a covering 50b, can be obtained by three-dimensional printing or "additive manufacturing", or alternative techniques such as "coating" and/or blowing and/or conventional processes and not conventional in a contemporary or separate manner with respect to the obtainment of the sole or midsole 1.

In a further version, the structure 50 and/or the outer covering 50b can be obtained through traditional non-additive techniques, such as non-additive molding, compression molding, thermoforming or blow molding, or covering/coating for example by rolling, injection, or pouring, etc.

In this way, therefore, in addition to the step of providing a structure 50 having a substantially annular shape and substantially corresponding to the shape of perimeter of the sole or midsole, in which the structure 50 is adapted to be inserted into and/or incorporate and/or enclose and/or cover at least laterally or at least partially said sole or midsole or said cellular structure 4, there is a step of obtaining the sole or midsole 1 assembled or joined with the structure 50.

The further structure 50, in a further version, comprises a base surface and/or at least a perimetral border suitable to encompass or enclose the sole or midsole or the cellular structure 4 at the lower surface 20 and/or the peripheral lateral border portion.

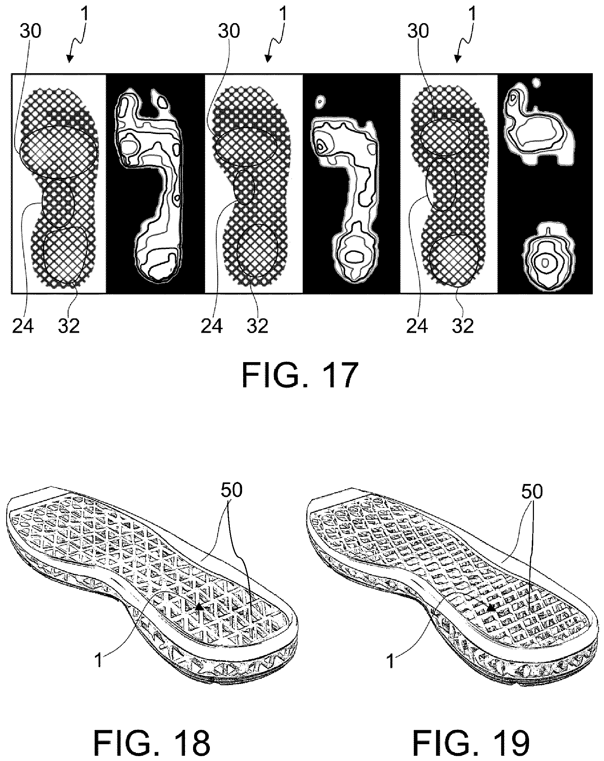

In a further version, alternatively or in combination with previous versions of the invention, the further structure 50 comprises a material adapted to penetrate inside the cells 4 and/or within the openings 12 (visible for example in Figures 18 and 19).

The material suitable to penetrate into the cells 4 and/or the openings 12 may be a soft material or a material in solidifiable fluid form. In this way, for example, during the production step of the structure 50, the material of the latter will flow inside at least part of the cells 4 in order to fill the internal volume and to vary the characteristics - of the relative cell - given by the structure and materials of the first elements 6 and/or of the nodes 8.

This material can then harden or solidify inside at least part of the cells 4, becoming one with the latter.

In one version of the invention, the material of the structure 50 penetrates inside the entire cellular structure 4 of the sole or midsole 1 and/or of the volume or space occupied or determined by the cells.

In this case, the structure 50 has a shape at least partially corresponding to that of the empty spaces of the cells 4 or of the cellular structure 4 that are occupied by the material of the further structure 50.

In a version in which the structure 50 penetrates inside the cellular structure 4, the structure 50 has a shape in plan substantially corresponding to that of the sole or midsole 1.

In a further version in which the structure 50 penetrates inside the cellular structure 4, the structure 50 has a substantially annular shape, corresponding to the perimeter portion of the sole or midsole 1, to which it is joined the material that is penetrated inside the cellular structure 4, for example having a shape in plan substantially corresponding to that of the sole or midsole 1.

Such material may for example be a polyurethane foam, a polyurethane material, ethylene-vinyl-acetate or SBS or a silicone rubber, etc.

Such structure 50, in this way, allows a better management and support of different pressures and/or elasticity that the sole or midsole according to the present invention must have.

Such structure 50 can thus be produced in a soft material.

In this way, the midsole or sole 1, according to the present invention is constituted by a double structure, the first is a cellular structure 4 described above and the second is the continuous or substantially continuous structure 50.

This structure 50 constitutes, at least according to some versions of the same, a sort of wall arranged to close the openings 12 (or at least those lateral) of the cells 4 of the cellular structure as set out above.

In a second version, the material of the structure 50 can at least partially enclose or cover the openings 12 of the cells 4 and/or penetrate into the same.

In this way, it prevents any dirt or dust from penetrating through the openings 12, at least lateral of the midsole of the sole 1. Moreover, thanks to the presence of the further structure 50, while preventing any possible deviations of the mechanical behavior caused by the presence of external bodies (also only including the formation/entrapment of water and/or mud), which could affect the "designed behavior" of the sole itself.

The structure 50 can also retain, preserve and/or improve the mechanical behavior of the midsole or sole thanks to the joint function of the structure 50 and of the elements 6 and/or nodes 8 - and/or of the cellular structure 4 - encapsulated into it. In one variant, the sole or midsole may therefore be as a composite, defined by the structure 50 and the elements present and/or variables within its interior.

Moreover, the structure 50 can facilitate the subsequent attachment of the upper or the outsole or tread B, during the steps of production of a shoe provided with a midsole 1 or of a sole according to the present invention.

Since the structure 50 can be, in one version of the invention, poured and/or molded in a traditional way and/or produced according to conventional and not-conventional manufacturing techniques, the midsole or sole 1, when equipped with the structure 50 produced in such a way, comprises a component produced either by three-dimensional printing or "additive manufacturing" (the sole or midsole 1), and in a traditional way.

The soles or midsoles according to the various versions of the present invention are illustrated by way of example also in Figures 18 to 23, wherein the cellular structure 4 (visible in transparency) is internal to the further structure 50, or coated or embedded from this latter or the outer covering 50b.

Therefore, when there is a further structure 50, the cellular structure 4 constitutes a midsole. The simultaneous presence of the further structure 50 and the cellular structure 4 constitutes a midsole (when an outer sole or tread has yet to be applied), or may constitute a complete sole.

In one version of the invention, the first elements 6 have a minimum size of 3 mm x 3 mm.

The midsole or sole according to the present invention was tested using a measuring machine of the dynamic compression called DYCO (dynamic compression) and patented by the present applicant.

This machine essentially reproduces the movements of walking and running of a user and measures the resistance to dynamic impacts supported during the course of such activities.

The absorption characteristics of the impacts of the midsole or sole 1 according to the present invention are comparable to the properties of absorption of the impacts of traditional midsoles produced from EVA (ethylene-vinyl-acetate) or better of the latter.

In addition, the soles or midsoles according to the present invention can be customized for each individual user with precision and effectiveness impossible with the methods employed to date.

The work leading to this invention has received funding from the European Community (Seventh Framework Program FP7/2007-2013 under grant agreement no. 609386).

It is thus seen that the sole or midsole according to the present invention determines an effective solution to the need of producing a sole for footwear, or in particular a customized midsole, able to respond to the above needs, while allowing the performance of athletic activity, for example walking, running or others, for which they are foreseen.

The midsole or sole for shoes described above is susceptible to numerous modifications and variations within the protection of the following claims.

## Claims

1. A sole or midsole for shoes, for example sports shoes, wherein said sole or said midsole comprises an upper surface (10) adapted, in use, to face toward the foot of a user, a lower surface (20) adapted, in use, to face toward the surface or the terrain of resting of said sole or midsole, and a thickness (S), **characterized in that** said sole or midsole comprises a modular structure with cells (4) along substantially the whole longitudinally or front-rear (F-R) extension and/or transversal or side-to-side extension and/or thickness (S) extension of said sole or midsole and/or in the space or volume defined or occupied by said sole or midsole.

2. Sole or midsole according to claim 1, wherein said modular structure with cells (4) has a shape with three-dimensional cells (4), grid-like or lattice-like or three-dimensional mesh-like or with three-dimensional modules and/or wherein said structure with cells (4) comprises a plurality of cells (4) comprising first elements (6) and vertices or nodes or convergence nodes (8), wherein said vertices or nodes or convergence nodes (8) correspond to the points of contact and/or intersection between at least two of said first elements (6).

3. Sole or midsole according to claim 1 or 2, wherein said sole or midsole comprises an additional structure (50), wherein said additional structure (50) is suitable to be inserted into and/or include and/or encompass and/or cover at least laterally or at least partially said sole or midsole or said structure with cells (4) and/or wherein said structure (50) has a substantially annular shape and substantially corresponding to the perimeter's shape of the sole or midsole.

4. Sole or midsole according to the preceding claim wherein said structure (50) comprises at least one elongated portion (50a) with substantially transverse development, i.e. from-side-to-side, considering said sole or midsole, and/or wherein said at least one elongated portion (50a) is placed transversally in the central portion of the sole, for example in the plantar arch area of the user's foot and/or wherein at least one elongated portion (50a) has a transversal development suitable for connecting or join the lateral edge and the medial edge of the sole (50).

5. Sole or midsole according to the preceding claim, wherein said at least one elongated portion (50a) has a longitudinal size, measured along the front-rear (F-R) direction of the sole or midsole, substantially constant along its whole development or that is greater at the peripheral edge of the sole or midsole and that gradually decreases towards the center of said sole or midsole and/or wherein said at least one elongated portion (50a) is placed at the upper surface 810) and/or lower surface (20) of said sole or midsole.

6. Sole or midsole according to claim 4, wherein said structure (50) comprises an outer covering (50b) that includes and/or encloses and/or covers at least laterally said sole or midsole or said structure with cells (4).

7. Sole or midsole according to any of claims 3 to 6, wherein said structure (50) and/or outer covering comprises a base surface and/or at least a perimetral edge suitable to include or enclose or cover said sole or midsole or said structure with cells (4) at the lower surface (20) and/or the lateral perimetral portion of the sole or midsole and/or said structure (50) and/or said outer covering are made of polyurethane or polyurethane foam or ethylene-vinyl-acetate or SBS or silicone rubber or any suitable material or of a soft material or a material in solidifiable fluid form and/or a material suitable to penetrate inside said cells (4) of said modular structure with cells (4) and/or the volume or space occupied or determined by said cells (4) and/or wherein said structure (50) is suitable to penetrate inside at least a part of said cells (4) and comprises a soft material or a material in solidifiable fluid form.

8. Sole or midsole according to any one of previous claims, wherein said modular structure with cells (4) has features of lift and/or elasticity and/or apparent density and/or density and/or shock absorption or cushioning continuously variable throughout substantially the entire longitudinal or front-rear (F-R) extension and/or transversal or side to side extension and/or the thickness (S) of said sole or midsole and/or wherein said features of lift and/or elasticity and/or apparent density and/or density and/or shock absorption or cushioning are calculated on the basis and as a function of biometric and/or biomechanical and/or biodynamic and/or of stability and/or of plantar pressure data and/or data arising from the study of the gait or walk of a user.

9. Sole or midsole according to claim 2, wherein each of said first elements (6) has a longitudinal length and a cross-section taken along a plane perpendicular to the length of said first element (6), wherein said cross-section is circular, triangular, substantially rectangular or square or polygonal, for example pentagonal, hexagonal, octagonal, etcetera, or bilobed, three-lobed, cloverleaf-shaped, etcetera, and/or wherein each of said vertices or nodes or convergence nodes (8) is substantially shaped like a solid geometric body, for example a sphere or a multi-faced sphere or given by the join or convergence of said first elements (6) in contact at said vertex or node or convergence node (8) and/or wherein said first elements (6) present an extension that is substantially elongated and/or linear and/or undulated along a direction, in use, substantially vertical, inclined or horizontal or undulated with respect to said sole or midsole and/or wherein said first elements (6') extend substantially along a longitudinal axis (x-x) or horizontal axis or front-rear (F-R) axis and/or wherein said first elements (6") extend substantially along a longitudinal (y-y) or vertical axis or an axis passing from said upper surface (10) to said lower surface (20) and/or wherein said first elements (6"') extend substantially along a longitudinal (z-z) or transverse or side-to-side axis and/or wherein said first elements (6f) extend along an oblique axis (w-w) not perpendicular to at least one axis (x-x), (y-y) and (z-z), wherein said axis (z-z) is perpendicular to both the axis (x-x) and the axis (y-y).

10. Sole or midsole according to claim 2, wherein said cells (4) have a substantially helical or spiral shape, wherein said first elements (6) are configured as helix or spiral and said nodes or convergence nodes (8) correspond to at least one end of the helixes or spirals.

11. Sole or midsole according to any one of the preceding claims, wherein said cell (4) of said plurality of cells (4) comprises more faces having a substantially regular or irregular polygonal shape, wherein said first elements (6) constitute sides or edges of said faces of said cell (4) and wherein said vertices or nodes or convergence nodes (8) constitute contact points between said first elements (6) and/or wherein said cell (4) has a substantially parallelepiped-like shape.

12. Sole or midsole according to any one of the preceding claims, wherein said structure with cells (4) comprises a plurality of cells (4) variously oriented in the space occupied by said sole or midsole and/or, in said sole or midsole, cells (4) may be present having different orientations from one another in the space occupied by said sole or midsole and/or wherein said structure with cells (4) comprises a plurality of cells (4) having shapes which are different and/or lie on different planes from cell to cell and/or wherein said cell structure (4) comprises a plurality of cells (4) having the same shape and/or sizes or dimensions and/or density and/or apparent density and/or cushioning capacity different from cell to cell, depending on the specific area of said sole or midsole in which they are located and/or wherein said cell structure (4) comprises a plurality of cells (4) repeated throughout the entire volume or space defined or occupied by said sole or midsole, wherein said plurality of cells is arranged on a single layer of cells (4) or on several layers of cells (4), for example overlapping and/or woven and/or incorporated layers.

13. Sole or midsole according to any one of the preceding claims, wherein the area enclosed between at least two of said first elements (6) or the area of said faces of said cells (4) is at least partially occupied by an opening (12) and/or wherein said cell (4) is an open cell, having at least one or at least two faces affected by said opening (12).

14. Sole or midsole according to any one of the preceding claims, comprising one or more differentiated areas of lift and/or elasticity and/or shock-absorbing capacity, for example an area (22) of pre-metatarsal support and/or an area (24) of medial support and/or an area (26) of lateral support and/or an area (28) of thrust support and/or an area (30) of metatarsal cushioning and/or an area (32) of heel cushioning, wherein said one or more areas are determined by the plurality of cells (4) and/or by the dimensions in length and cross-section of said first elements (6) and of said nodes or convergence nodes (8) and/or by their apparent density and/or arrangement within the volume of said sole or midsole and/or wherein said sole or midsole and/or said structure with cells (4) can be customized according to the foot pressure distribution of the user and/or of its kinematics and/or of the walking or running mode of the user, and/or by the type of movement or athletic action to be performed through the use of the sole or midsole itself, wherein said customization is achieved by a difference in lift and/or elasticity and/or apparent density and/or density and/or shock absorption capacity of said cells (4) of said structure with cells (4) in a continuous and gradual way from point to point or from area to area of said sole or midsole.

15. Sole or midsole according to any one of the preceding claims, wherein said upper surface (10) and/or said lower surface (20) and/or said additional structure (50) and/or said outer covering (50b) comprise a peripheral edge (40), possibly at least slightly or partially raised or indented in relation to said upper surface (10) and/or said lower surface (20) in order to facilitate the fixing of said sole or midsole with an upper and/or a tread (B).

16. Sole or midsole according to any one of the preceding claims, wherein said structure with cells (4) and/or said sole or midsole is made by three-dimensional printing or "additive manufacturing" or "SLS" or "Selective Laser Sintering", "FDM" or "Fused Deposition Modeling", "SLA" or "Stereolithography" or "DLP" or "Digital Light Processing" or "CLIP" or "Continuous Liquid Interface Production" or "MJM" or "Multi Jet Modeling" or "PolyJet" or other similar techniques.

17. Shoe, in particular a sports shoe, comprising a sole or midsole according to any one of preceding claims.

18. A method for the realisation of a sole or midsole comprising the following steps:
acquiring one datum or more data relative to individual measures of a user, such as measurements of personal biomechanical features and/or features of dynamic of the foot's resting and/or biometric and/or biodynamic features and/or features of plantar pressures for an athletic activity or action or for a movement that the user intends to perform,
transforming, using a dedicated software, said data into a functional matrix, possibly on the basis of a specific model,
obtaining from said functional matrix a digital file for a sole or midsole according to one or more of claims 1 to 16,
printing said sole or midsole from said digital file by three-dimensional printing or "additive manufacturing" or "SLS" or "Selective Laser Sintering", "FDM" or "Fused Deposition Modeling", "SLA" or "Stereolithography" or "DLP" or "Digital Light Processing" or "CLIP" or "Continuous Liquid Interface Production" or "MJM" or "Multi Jet Modeling" or "PolyJet" or other similar techniques, in order to obtain said sole or midsole comprising an upper surface (10) adapted, in use, to face toward the foot of a user, a lower surface (20) adapted, in use, to face toward the surface or the terrain of resting of said sole or midsole, and a thickness (S), wherein said sole or midsole comprises a modular structure with cells (4) along substantially the whole longitudinally or front-rear (F-R) extension and/or transversal or side-to-side extension and/or thickness (S) extension of said sole or midsole and/or in the space or volume defined or occupied by said sole or midsole.

19. Method according to claim 18, comprising the following steps:
providing an structure (50), wherein said structure (50) is suitable to be inserted into and/or include and/or encompass and/or cover at least laterally or at least partially said sole or midsole or said structure with cells (4),
obtaining said structure (50) by three-dimensional printing or "additive manufacturing" or alternative techniques or "coating" or coating and/or blowing and/or other traditional and non-traditional processes, in the same time with said sole or midsole or by a separate step of molding with respect to said printing step of said sole or midsole, or obtaining said structure (50) by a step of pouring or of non-additive printing or compression molding or blow molding, or covering or coating by rolling, or thermoforming or injection of the material of which is made said structure (59),
obtaining said sole or midsole assembled or join with said structure (50), and/or letting the material that comprises said structure (50) penetrate inside at least part of said structure with cells (4) or inside the space or volume occupied or determined by at least some cells (4).
